# FASCICULE DE BREVET EUROPEEN

(11) **EP 3 155 705 B1**
(45) Date de publication et mention de la délivrance du brevet: **11.10.2023**
(21) Numéro de dépôt: 15727674.2
(22) Date de dépôt: 10.06.2015
(51) Int. Cl.: H02J 1/08, H02J 7/00, B63H 21/17

(54) **ENGIN SOUS-MARIN COMPORTANT DES SOURCES DE STOCKAGE D'ÉNERGIE À BASE DE BATTERIES LITHIUM-ION**
UNTERWASSERFAHRZEUG MIT AUS LITHIUM-IONEN-BATTERIEN BESTEHENDEN LEISTUNGSSPEICHERQUELLEN
UNDERWATER VEHICLE COMPRISING POWER STORAGE SOURCES MADE FROM LITHIUM-ION BATTERIES

(30) Priorité: 13.06.2014 FR 1401348
(43) Date de publication de la demande: 19.04.2017
(73) Titulaire: NAVAL GROUP, 75015 Paris (FR)
(72) Inventeur: KERUEL, Bernard, F-29470 Plougastel Daoulas (FR); PIERRE, Nicolas, F-29000 Quimper (FR)
(74) Mandataire: Lavoix
(86) Numéro de dépôt international: PCT/EP2015/062966
(87) Numéro de publication internationale: WO 2015/189287

(56) Documents cités:
- EP-A2- 1 641 066
- DE-A1- 4 014 611
- US-A1- 2014 184 162

## Description

La présente invention concerne un engin sous-marin tel qu'un sous-marin proprement dit.

Ce type d'engins sous-marin est muni de moyens électriques de propulsion alimentés à partir d'un réseau de distribution électrique.

En règle générale pour des raisons de sécurité, le réseau de distribution électrique embarqué est découpé en bords.

Ce type d'engins sous-marin embarque également une grande quantité de sources de stockage d'énergie électrique à tension continue.

En raison de leur faible masse, les batteries Lithium-ion permettent d'envisager d'embarquer une grande capacité de stockage à bord de l'engin.

EP 1 641 066 A2 décrit un système de batterie pour sous-marin ayant au moins deux modules de batterie.

Toutefois, dans le cas d'une architecture de batteries où l'on place des batteries ou des ensembles de batteries possédant la tension attendue, en parallèle pour constituer l'ensemble des moyens de stockage et atteindre ainsi la capacité attendue, on met en parallèle des sources de tension susceptibles de se décharger les unes dans les autres notamment en cas de court-circuit en amont du tableau électrique d'alimentation du réseau.

Ceci impose alors de fortes contraintes sur les organes de protection des ensembles qui doivent être dimensionnés par rapport au nombre d'ensembles en parallèle.

Par ailleurs des risques de vieillissement prématuré de ces batteries peuvent également être constatés, notamment lorsqu'une charge permanente dite flottante ou « floating » en anglais, leur est appliquée.

Le but de l'invention est donc de résoudre ces problèmes.

A cet effet l'invention a pour objet un engin sous-marin tel que défini dans la revendication 1.

Selon d'autres caractéristiques prises seules ou en combinaison, l'engin sous-marin selon l'invention peut comporter également l'une ou plusieurs des caractéristiques des revendications 2 à 4.

L'invention sera mieux comprise à l'aide de la description qui va suivre, donnée uniquement à titre d'exemple et faite en se référant aux dessins annexés sur lesquels :
- la figure 1 représente un schéma synoptique illustrant la structure d'un réseau électrique de bord embarqué dans un engin sous-marin selon l'invention, et
- les figures 2, 3, 4, 5, 6, 7 et 8 illustrent le fonctionnement d'un tel réseau selon différentes configurations de fonctionnement possibles.

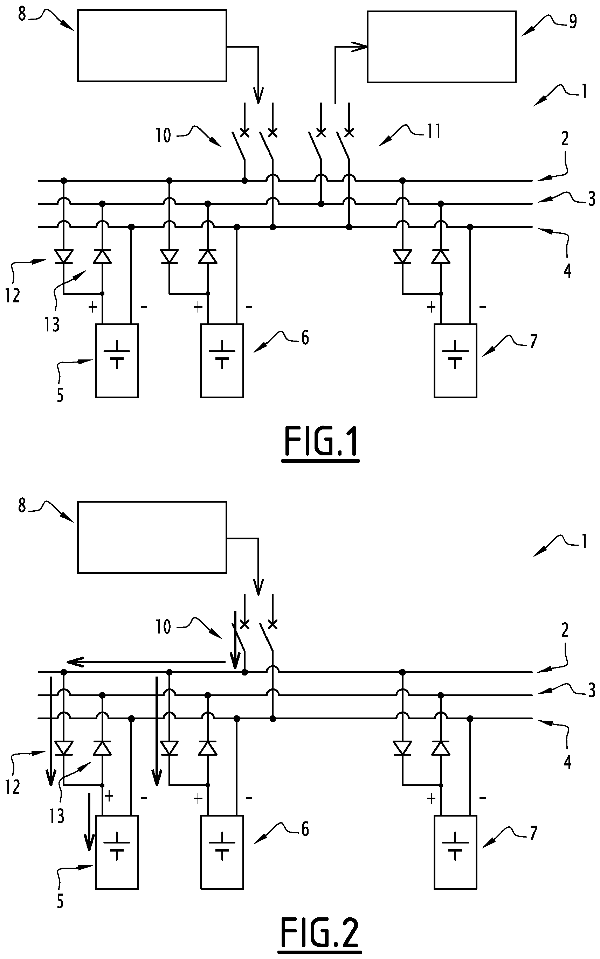

On a en effet illustré sur ces figures et en particulier sur la figure 1, un réseau électrique de bord 1 d'un engin sous-marin tel qu'un sous-marin.

Ce réseau comporte des lignes électriques par exemple au nombre de trois et désignées respectivement par les références 2, 3, 4.

L'engin sous-marin comporte également une pluralité de sources de stockage d'énergie à tension continue à base de batteries Lithium-ion. Dans l'exemple de réalisation illustré sur la figure 1, trois sources 5, 6, 7 sont représentées.

Chaque source possède une borne positive et une borne négative et est raccordée d'une part à des moyens 8 de charge et d'autre part à des consommateurs 9 d'énergie de l'engin par l'intermédiaire de disjoncteurs 10 et 11 respectivement.

En fait, et comme cela est illustré, les moyens 8 de charge sont raccordés entre les lignes 2 et 4 du réseau électrique 1. Ces lignes 2 et 4 sont également raccordées aux bornes positive et négative respectivement des sources 5, 6, 7.

En particulier la ligne 2 est raccordée à la borne positive de la source 5 par exemple à travers des moyens 12 à conduction unidirectionnelle à semi-conducteur montés dans le sens passant.

Les consommateurs 9 sont quant à eux raccordés entre les lignes 3 et 4 du réseau électrique 1. Comme cela est illustré, la borne positive des batteries est également raccordée à la ligne 3 du réseau par exemple à travers des moyens 13 à conduction unidirectionnelle à semi-conducteur montés dans le sens passant.

Ainsi, on utilise des circuits différents selon que les batteries sont en charge ou en décharge afin de pouvoir facilement mettre en oeuvre des moyens 12, 13 de protection en tête des sources 5, 6, 7 sans avoir recours à des interrupteurs commandés.

Ces moyens 12, 13 sont par exemple des diodes.

Grâce à une distribution sur trois lignes d'alimentation, les diodes 12, 13 en tête des sources 5, 6, 7 imposent de façon passive, c'est-à-dire non commandée, le sens de transfert d'énergie entre les sources 5, 6, 7 et le réseau de consommateurs 9 ou entre les moyens de charge 8 et celles-ci, suivant que l'on est en décharge ou en charge.

Ainsi par exemple et comme cela est illustré sur la figure 2 par des flèches en traits gras, lorsque les sources 5, 6, 7 sont en charge, de l'énergie en provenance des moyens 8 de charge est apportée à ces sources 5, 6, 7 en passant à travers les diodes 12 correspondantes.

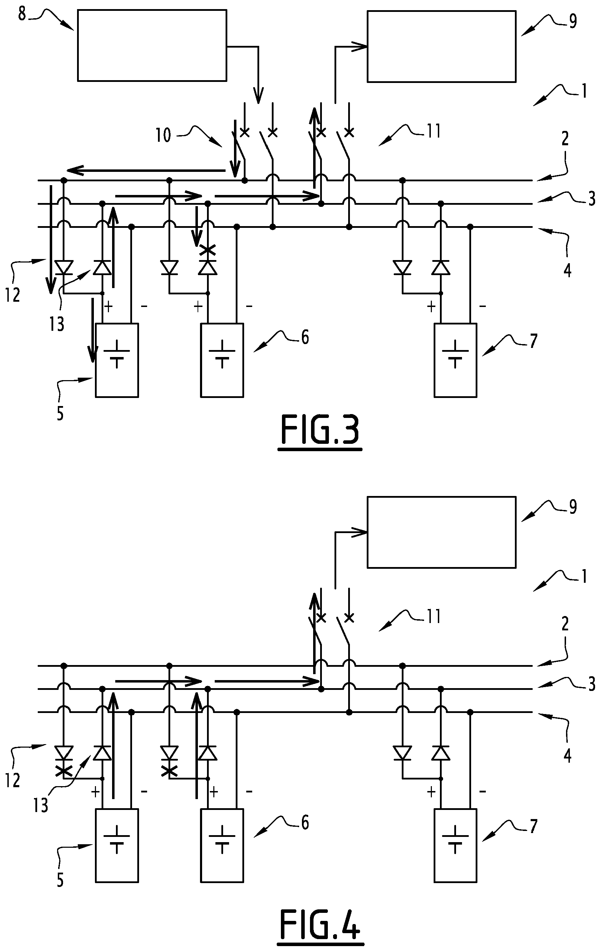

Comme cela est illustré sur la figure 3, de l'énergie peut également être fournie aux consommateurs 9 tout en rechargeant les batteries des sources 5, 6, 7 comme c'est le cas actuellement avec les batteries classiques. Par contre, l'énergie ne se décharge pas d'un ensemble de batteries vers un autre en raison des diodes 13 montées en anti-retour, par exemple.

Comme cela est illustré sur la figure 4, en décharge, l'ensemble des batteries des sources 5, 6, 7 délivre de l'énergie au travers des diodes 13 montées en sens passant, depuis les sources 5, 6, 7.

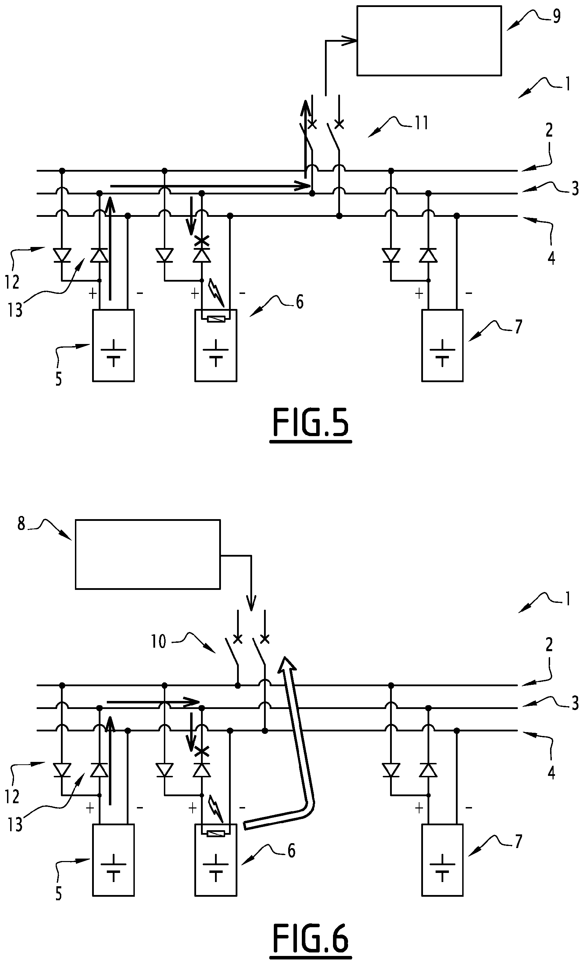

Par contre et comme cela est illustré sur la figure 5, un ensemble de batteries d'une source 5, 6, 7 n'est rechargeable que par les moyens 8 de charge et non pas par des ensembles de batteries d'autres sources 5, 6, 7 qui viendraient se décharger dans celui-ci.

Cette situation pouvait être rencontrée en cas de court-circuit au niveau de l'ensemble en question ou en cas de faiblesse de cet ensemble par rapport aux autres ensembles, par exemple une faiblesse due à une tension plus faible que celle des autres ensembles.

Si un court-circuit ou une faiblesse apparaît au niveau d'une source 5, 6, 7 lors de la décharge, les autres sources 5, 6, 7 ne peuvent pas se décharger dans celle-ci car elle est bloquée par la diode 13 liée au circuit de décharge et par des organes de protection tels que par exemple des fusibles dimensionnés indépendamment du nombre de sources 5, 6, 7 en parallèle et donc plus petits.

Ceci est par exemple illustré sur la figure 5 et sur la figure 6.

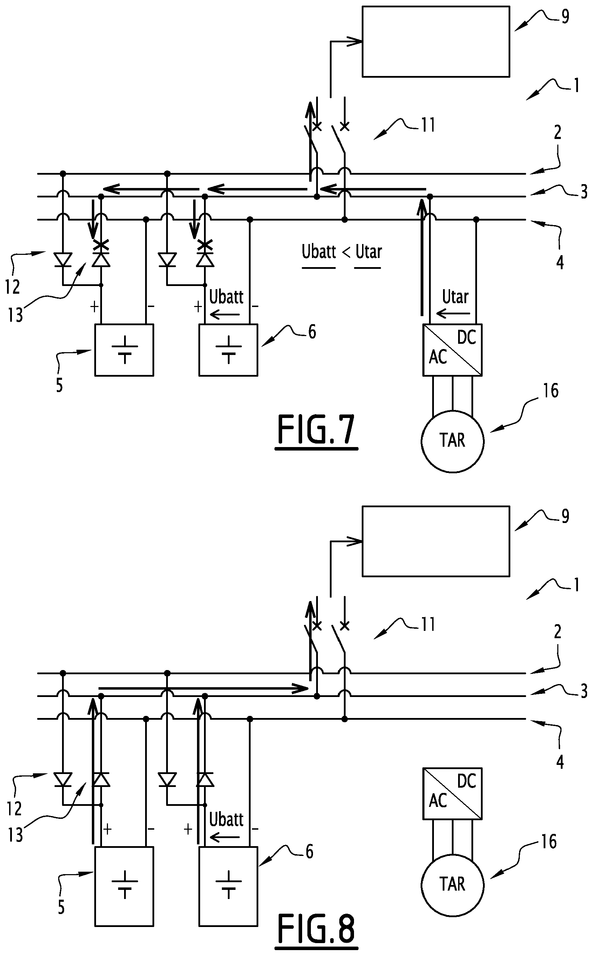

Un autre avantage de ce réseau électrique est illustré sur les figures 7 et 8.

En effet, grâce à l'utilisation des diodes 12, 13 en tête d'ensembles de batteries, il est envisageable de maintenir les batteries des sources 5, 6, 7 à un haut niveau de charge tout en faisant en sorte qu'elles soient instantanément disponibles.

On réalise ainsi la même fonction qu'en mode flottant mais sans recharger continuellement la batterie et donc sans risquer de provoquer un vieillissement prématuré de celle-ci.

Ceci est possible grâce à la faible autodécharge d'une batterie Lithium-ion et au fait que les sources 5, 6, 7 ne peuvent pas se décharger les unes dans les autres.

En effet, pour qu'une source 5, 6, 7 ne se décharge pas vers les consommateurs 9 d'énergie de l'engin, il suffit que sa tension à pleine charge soit légèrement inférieure à la tension continue des consommateurs 9.

Ainsi, quand une autre source 16 est en fonctionnement, sa tension supérieure à celle de chacune des sources 5, 6, 7 empêche ces sources 5, 6, 7 de se décharger vers les consommateurs 9 tandis que les diodes 13 empêchent cette source 16 de recharger la batterie.

En cas de perte de la source 16, la tension de cette source 16 passe en dessous de celle des sources 5, 6, 7 qui prennent alors naturellement le relais au niveau de l'alimentation des consommateurs 9.

La commutation naturelle grâce aux diodes 12, 13 est illustrée sur la figure 8.

Ainsi, la présente invention permet de protéger les ensembles de batteries contre les décharges intempestives, de simplifier le dimensionnement des organes de protection de ces ensembles et de permettre d'avoir un comportement de la batterie équivalent à celui qu'elle aurait en mode flottant sans les inconvénients de ce mode flottant, le tout de façon naturelle grâce aux diodes 12, 13 qui ne nécessitent pas de commande spécifique.

## Revendications

1. Engin sous-marin comprenant :
- un réseau électrique de bord (1), le réseau électrique (1) comprenant des lignes électriques (2, 3, 4),
- une pluralité de sources (5, 6, 7) de stockage d'énergie à tension continue à base de batteries Lithium-ion, chaque source (5, 6, 7) possédant une borne positive et une borne négative et étant raccordée d'une part à des moyens de charge (8) et d'autre part à des consommateurs d'énergie (9) de l'engin, l'une des bornes de chaque source (5, 6, 7) étant branchée à une première ligne électrique (4) du réseau électrique (1), l'autre borne de chaque source étant branchée d'une part par une deuxième ligne électrique (2) du réseau électrique (1) aux moyens de charge (8) à travers des premiers moyens à conduction unidirectionnelle à semi-conducteur (12), lesdits premiers moyens à conduction unidirectionnelle à semi-conducteur (12) étant montés dans le sens passant défini depuis la deuxième ligne électrique (2) vers l'autre borne de chaque source (5, 6, 7),
**caractérisé en ce que** l'autre borne de chaque source est branchée d'autre part par une troisième ligne électrique (3) du réseau électrique (1) aux consommateurs (9) à travers des deuxièmes moyens à conduction unidirectionnelle à semi-conducteur (13), et
**en ce que** lesdits deuxièmes moyens à conduction unidirectionnelle à semi-conducteur (13) sont montés dans le sens passant défini depuis l'autre borne de chaque source (5, 6, 7) vers la troisième ligne électrique (3).

2. Engin sous-marin selon la revendication 1, **caractérisé en ce que** les premier et deuxième moyens (12, 13) à conduction unidirectionnelle à semi-conducteur comprennent des diodes.

3. Engin sous-marin selon la revendication 1 ou 2, **caractérisé en ce que** la borne des sources (5, 6, 7) branchée à la première ligne électrique (4) du réseau électrique (1) est la borne négative des sources (5, 6, 7).

4. Engin sous-marin selon l'une quelconque des revendications précédentes, **caractérisé en ce que** des disjoncteurs (10, 11) sont prévus dans le réseau électrique (1).

## Patentansprüche

1. - Unterwasserfahrzeug, umfassend:
- ein Bordstromnetz (1), wobei das Stromnetz (1) Stromleitungen (2, 3, 4) umfasst,
- eine Vielzahl von Quellen (5, 6, 7) zur Speicherung von Gleichspannungsenergie basierend auf Lithium-lonen-Batterien, wobei jede Quelle (5, 6, 7) einen Plus- und einen Minus-Anschluss besitzt und einerseits mit Ladeeinrichtungen (8) und andererseits mit Energieverbrauchern (9) des Fahrzeugs verbunden ist, wobei einer der Anschlüsse jeder Quelle (5, 6, 7) an eine erste Stromleitung (4) des Stromnetzes (1) angeschlossen ist, wobei der andere Anschluss jeder Quelle einerseits über eine zweite Stromleitung (2) des Stromnetzes (1) über erste unidirektional leitende Halbleitereinrichtungen (12) an die Ladeeinrichtungen (8) angeschlossen ist, wobei die ersten unidirektional leitenden Halbleitereinrichtungen (12) in der Durchgangsrichtung montiert sind, die von der zweiten Stromleitung (2) zu dem anderen Anschluss jeder Quelle (5, 6, 7) definiert ist,
**dadurch gekennzeichnet, dass** der andere Anschluss jeder Quelle andererseits über zweite unidirektional leitende Halbleitereinrichtungen (13) durch eine dritte Stromleitung (3) des Stromnetzes (1) mit den Verbrauchern (9) verbunden ist, und
dass die zweiten unidirektional leitenden Halbleitereinrichtungen (13) in der Durchgangsrichtung montiert sind, die von dem anderen Anschluss jeder Quelle (5, 6, 7) zu der dritten Stromleitung (3) definiert ist.

2. Unterwasserfahrzeug nach Anspruch 1, **dadurch gekennzeichnet, dass** die ersten und die zweiten unidirektional leitenden Halbleitereinrichtungen (12, 13) Dioden umfassen.

3. Unterwasserfahrzeug nach Anspruch 1 oder 2, **dadurch gekennzeichnet, dass** der Anschluss der Quellen (5, 6, 7), der an die erste Stromleitung (4) des Stromnetzes (1) angeschlossen ist, der Minus-Anschluss der Quellen (5, 6, 7) ist.

4. Unterwasserfahrzeug nach einem der vorherigen Ansprüche, **dadurch gekennzeichnet, dass** in dem Stromnetz (1), Leistungsschalter (10, 11) bereitgestellt sind.

## Claims

1. An underwater vehicle, comprising:
- an on board power grid (1), the power grid (1) comprising powerlines (2, 3, 4),
- a plurality of DC energy storage sources (5, 6, 7) based on lithium-ion batteries, each source (5, 6, 7) having a positive terminal and a negative terminal, and being connected on the one hand to charging means (8) and on the other hand to energy consumers (9) of the vehicle, one of the terminals of each source (5, 6, 7) being connected to a first powerline (4) of the power grid (1), the other terminal of each source being connected on the one hand by a second powerline (2) of the power grid (1) to the charging means (8) through first one-way semiconductor conducting means (12), said first one-way semiconductor conducting means (12) being mounted in the forward direction defined from the second powerline (2) to the other terminal of each source (5, 6, 7),
**characterized in that** the other terminal of each source is connected on the other hand by a third powerline (3) of the electric grid (1) to consumers (9) through second one-way semiconductor conducting means (13), and
**in that** said second one-way semiconductor conducting means (13) are mounted in the forward direction defined from the other terminal of each source (5, 6, 7) to the third powerline (3).

2. The underwater vehicle according to claim 1, **characterized in that** the one-way semiconductor conducting means (12, 13) comprise diodes.

3. The underwater vehicle according to claim 1 or 2, **characterized in that** the terminal of the sources (5, 6, 7) connected to the first powerline (4) of the power grid (1) is the negative terminal (5, 6, 7) of the sources.

4. The underwater vehicle according to any one of the preceding claims, **characterized in that** circuit breakers (10, 11) are provided in the electric grid (1).
